# EUROPEAN PATENT SPECIFICATION

(11) **EP 4 011 646 B1**
(45) Date of publication and mention of the grant of the patent: **01.05.2024**
(21) Application number: 21211320.3
(22) Date of filing: 30.11.2021
(51) Int. Cl.: B60C 9/22, B60C 11/00, B60C 9/20, B60C 11/13

(54) **TRUCK TIRE**
LASTWAGENREIFEN
PNEUMATIQUE DE CAMION

(30) Priority: 14.12.2020 US 202017120323
(43) Date of publication of application: 15.06.2022
(73) Proprietor: The Goodyear Tire & Rubber Company, Akron, OH 44316 (US)
(72) Inventor: MULLER, Philippe Joseph Auguste, B-6971 Champlon (BE); PASSANTE SPACCAPIETRA, Ettore, L-9070 Ettelbruck (LU); GERARD, Denis, B-6700 Stockem (BE); WINKIN, Didier, B-6600 Bastogne (BE); MANOGARAN, Arun Prasath, L-7740 Colmar-Berg (LU)
(74) Representative: Kutsch, Bernd

(56) References cited:
- EP-A1- 2 629 987
- EP-A2- 2 199 104
- EP-A2- 2 889 157
- JP-A- 2009 126 314
- US-A1- 2004 244 894

## Description

### Field of the Invention

The invention relates in general to pneumatic tires, and more particularly for heavy vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability, and improved resistance to groove cracking and increased load carrying capacity is desired.

US 2004/0244894 A1 describes a tire in accordance with the preamble of claim 1.

Other tires having a belt structure and a tread comprising a rubber composition with a specified tensile strength and elongation at break are known from EP 2 629 987 A1, EP 2 199 104 A2 and EP 2 889 157 A2.

### Summary of the Invention

The invention relates to a tire in accordance with claim 1.

Dependent claims refer to preferred embodiments of the invention.

The invention provides a pneumatic tire for use on trucks wherein the tire has a tread and a belt reinforcement structure located radially inward of the tread, the belt structure including a first and second working belt, wherein the first and second working belts are formed of extensible reinforcements, wherein the angle of the first and second working belts range from 10 degrees to 50 degrees as measured relative to the circumferential direction, wherein the belt structure further comprises a relatively low angle belt having reinforcements angled at less than 5 degrees relative to the circumferential direction, wherein the relatively low angle belt has extensible reinforcements, and wherein the tread is formed of a tread compound having a tensile strength at break greater than 18 MPa and an elongation at break greater than 450%, when measured at 23°C, and a tensile strength at break greater than 12 MPa and an elongation at break greater than 600%, when measured at 100°C.

### Definitions

"Aspect Ratio" means the ratio of a tire's section height to its section width.
"Axial" and "axially" mean the lines or directions that are parallel to the axis of rotation of the tire.
"Belt Structure" or "Reinforcing Belts" means preferably at least two annular layers or plies of parallel cords, woven or unwoven, underlying the tread, unanchored to the bead.
"Circumferential" means lines or directions perpendicular to the axial direction of the tire and along the perimeter of the tire.
"Cord" means one of the reinforcement strands, including fibers, which are used to reinforce the plies.
"Extensible" means a cord or wire having a relative elongation at break of greater than 0.2% at 10% of the breaking load, when measured from a cord or wire extracted from a cured tire. The tensile strength measurements for elongation at break (total elongation in %) are performed in accordance with ISO 6892-1 B (2019) at preload no more than 25 MPa, such as 10 MPa, tested on a wire or cord taken from a cured tire.
"Ply" means a cord-reinforced layer of elastomer-coated, radially deployed or otherwise parallel cords.
"Radial" and "radially" mean directions radially toward or away from the axis of rotation of the tire.

### Brief Description of the Drawings

The invention will be described by way of example and with reference to the accompanying drawings in which:
FIG. 1 is a cross-sectional view of a tire of the present invention; and

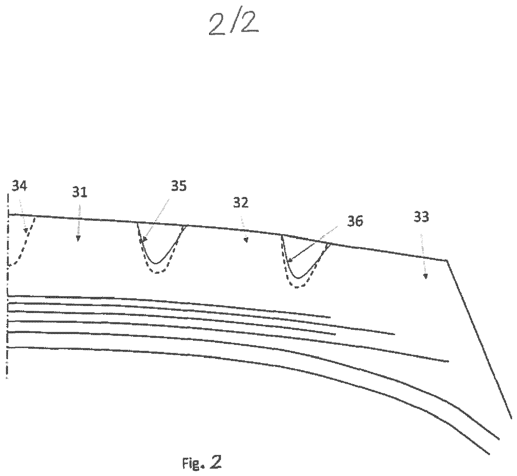

FIG. 2 is a close-up view of the belt package of the tire of FIG. 1.

### Detailed Description of Preferred Embodiments of the Invention

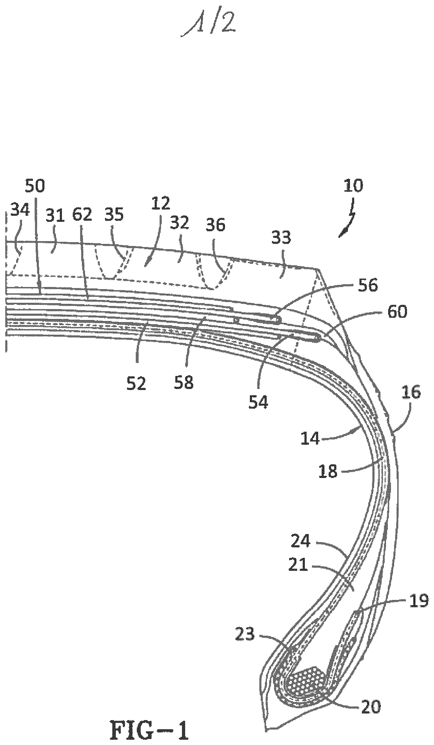

Figure 1 illustrates one half of a pneumatic tire 10 suitable for use as a truck tire. The tire 10 has a tread 12 with a non-skid depth D. The tire tread 12 may comprise a plurality of circumferentially continuous ribs, which may vary, but are shown for example as ribs 31, 32 and 33. Positioned between each rib is a circumferential groove 34, 35, 36, which are preferably continuous.

The tire tread is formed of a tread compound or of a tread cap compound having a tensile strength at break greater than 18 MPa, when measured at 23°C. The tread compound or tread cap compound further has an elongation at break greater than 450%, when measured at 23°C.

The tread compound or the tread cap compound has a tensile strength at break greater than 12 MPa, when measured at 100°C. The tread compound or tread cap compound further has an elongation at break greater than 600%, when measured at 100°C.

In a preferred embodiment and under higher temperature conditions, the tread compound or the tread cap compound has a tensile strength at break greater than 18 MPa, when measured at 100°C.

The tensile strength measurements such as the load at break (maximum load in N), strength at break (in MPa) and elongation at break (total elongation in %) are performed in tension in accordance with ISO 6892-1 B (2019) at a pre-load no more than 25 MPa, such as 10 MPa, tested on a cable or wire when taken from a cured tire.

A method to characterize tensile strength such as the load at break (maximum load in N), strength at break (in MPa) and elongation at break (total elongation in %) is also provided in DIN 53504-2009-10.

The characterization of tensile strength is performed on samples taken from cured tires at the temperature specified above.

The tire 10 further comprises a casing 14 which includes two opposed sidewalls 16 which extend down from the tread 12 to the bead area. The casing of the tire preferably includes an inner liner 24 which is typically formed of halobutyl rubber which forms an air impervious barrier. The tire casing 14 further includes one or more radial plies 18 extending from the tread, down the sidewall to the tire bead 20. Preferably, the radial ply 18 is wrapped about or otherwise secured to each annular bead 20. In the embodiment illustrated, there is only one ply 18 and it is wrapped around the bead in an inside out manner such that the ply ending 19 is located axially outward and radially outwards of the bead. The beads 20 may be any desired shape, but in this embodiment, it is shown as a hexagonal configuration with steel filaments.

The tire may further optionally include an apex 21 which may be shaped like a triangle. The ply turnup in the bead area may be optionally reinforced with a chipper 23 wrapped about the bead ply 18.

### Aspect Ratio

The aspect ratio of the tire described is preferably in the range of from 45 to 80. The tire preferably has a net to gross ratio in the range of from 60 to 90, more preferably in the range of from 65 to 88 or from 70 to 85.

The tire 10 further includes a belt package 50 which is located between the tread 12 and the one or more plies 18. The belt package 50 comprises several layers comprising reinforcement.

The ply 18 and the belt reinforcing structure 50 are made from cord reinforced elastomeric material, wherein the cords are typically steel wire or polyamide filaments and the elastomer preferably being rubber.

### Working Belts 54, 56

Belt reinforcing structure 50 includes a first working belt 54 and a second working belt 56, which preferably comprise extensible reinforcement cords. The first working belt 54 is located radially inwards of the second working belt 56.

Preferably, first working belt 54 has a belt width substantially equal to the tread arc width and is preferably the widest belt of the belt package 50.

The breaker angle of first working belt 54 is between 10 and 50 degrees, preferably with a right orientation, more preferably in the range of 14 to 42 degrees, and more preferably in the range of 16 to 35 degrees.

Preferably, the first working belt 54 comprises extensible or high elongation wire and has a % elongation at 10% of breaking load of greater than 0.2%, as measured from a cord taken from a cured tire. More, preferably, the % elongation at the 10% of breaking load is greater than 0.4 %, and even preferably greater than 0.8%, and most preferably greater than 1.2%.

The tensile measurements on the working belts 54, 56 such as the load at break (maximum load in N), strength at break (in MPa) and elongation at break (total elongation in %) are performed in tension in accordance with ISO 6892-1 B (2019) at a pre-load no more than 25 MPa, such as 10 MPa, tested on a cable or wire taken from a cured tire.

A method to characterize tensile strength such as the load at break (maximum load in N), strength at break (in MPa) and elongation at break (total elongation in %) is also provided in DIN 53504-2009-10.

The characterization of tensile strength is performed on samples taken from a cured tire at the temperature specified above.

The first working belt 54 preferably comprises a reinforcement cord formed of wire having a wire construction of 3x7x, 3x4x, 4x4x, or, preferably, of 4+3x. Preferably, the cord construction is 4+3x0.35 UT (UT = ultra-tensile steel). The EPI (ends per 2.54 cm) preferably range from 8 to 14.

The second working belt 56 is located radially outward of the first working belt 54, and preferably has a width less than the width of first working belt 54. Preferably, the second working belt 56 has a width less than the width of belt 54 by a step off, which preferably ranges from 10 to 20 mm. Preferably, the gauge cord to cord between the second working 56 belt and the first working belt 54 is less than 6 mm.

The working belt 56 has a breaker angle between 10 to 50 degrees, and more preferably in the range of 14 to 42 degrees, preferably with a left orientation, and more preferably in the range of 16 to 35 degrees.

Preferably, the breaker angle of the first working belt 54 is different than the breaker angle of the second working belt 56.

The angle of either the first or second working belt is the angle of the parallel reinforcement cords relative to the circumferential direction of the tire 10.

More preferably, the angle of the first working belt α₁ is greater than the angle of the second working belt α₂.

Preferably, the absolute difference of the angle of the first working belt 54 and the angle of the second working belt 56 |α₁₋ α_{2|} is greater than 5 degrees.

Preferably, the second working belt 56 comprises extensible or high elongation wire and has a % elongation at 10% of breaking load of greater than 0.2%, as measured from a cord taken from a cured tire. More, preferably, the % elongation at the 10% of breaking load is greater than 0.4 %, and even preferably greater than 0.8%, and most preferably greater than 1.2%.

The second working belt 56 preferably comprises a reinforcement cord formed of wire having a wire construction of 3x7x, 3x4x, 4x4x, or, preferably, of 4+3x. Preferably, the cord construction is 4+3x0.35 UT (UT = ultra-tensile steel). The EPI (ends per 2.54 cm) preferably range from 8 to 14.

The second working belt 56 is preferably made of extensible cord or wire having the same construction with the same but opposite angular orientation as the first working belt 54.

### Relatively Low Angle Belt 58

The belt structure 50 further comprises a relatively low angle belt 58 which is preferably located between the working pair belts, 54, 56. The relatively low angle belt 58 may also be located between belts 52 and 54 or radially outward of belt 56.

The relatively low angle belt 58 has reinforcements that are oriented circumferentially at 5 degrees or less, preferably 0 degrees.

The relatively low angle belt 58 belt is preferably formed from spirally winding a rubberized strip of one or more cords.

Preferably, the strip has 1 to 4 steel cords, and has a strip width less than 15 mm, and more preferably 5 mm or 5 mm to 8 mm.

Alternatively, the belt may be formed of a cut belt with the reinforcements oriented in the range of 0 to 10 degrees from the circumferential direction, or more preferably in the range of zero to five degrees from the circumferential direction.

The relatively low angle belt 58 has a width sized to avoid compression in the shoulder area.

The belt width of the relatively low angle belt 58 is preferably less than the belt width of the first and second working belts 54, 56 and is preferably wider than the top belt 62.

The belt structure of the relatively low angle belt 58 may be steel formed of a 3x7 construction, a 3x4 construction, or a 4x4 construction. More preferably, the belt structure of the relatively low angle belt 58 is steel formed of a 3x7x0.22 construction, a 3x4x0.26 construction, or a 4x4x0.22 construction, and preferably formed of high tensile steel.

The reinforcement cords of the relatively low angle belt 58 are extensible. For measurements taken from bare cords, the % elongation at 10% of breaking load is 0.2 or more, and preferably 0.4 % or more, and more preferably 0.6% or more, and most preferably 0.8%. The tensile measurements such as the load at break (maximum load in N), strength at break (in MPa) and elongation at break (total elongation in %) are performed in tension in accordance with ISO 6892-1 B (2019) at a pre-load no more than 25 MPA, such as 10 MPa, tested on a cable or wire taken from a cured tire.

Alternatively, the relatively low angle belt may be formed of non-metal reinforcements such as aramid, carbon fiber, or polyketone or POK.

### Top Protection Belt

The belt structure may further include a top protector belt 62 that is the radially outermost belt. The top protector belt 62 preferably has a width that is in the range of from 80% to 85% of the width of the relatively low angle belt 58. Preferably, the top protector belt 62 has the same breaker angle and orientation as the adjacent working belt 56.

Overall, the tire in accordance with the invention has improved shock absorbing characteristics during an impact and an improved stress relieve, in particular on the tread shoulder grooves. This leads to an improved crown durability and increased load carrying capacity. The tire also shows an excellent retreadability.

## Claims

1. A pneumatic tire for use on trucks, the tire (10) comprising a tread (12) and a belt structure (50) located radially inward of the tread (12), the belt structure (50) including a first working belt (54) and a second working belt (56), wherein the angle of the first and second working belts (54, 56) range from 10 degrees to 50 degrees as measured relative to the circumferential direction of the tire (10), wherein the belt structure (50) further comprises a relatively low angle belt (58) having extensible reinforcement cords angled at less than 5 degrees relative to the circumferential direction of the tire (10), **characterized in that** the tread (12) comprises a tread compound having (i) a tensile strength at break greater than 18 MPa and an elongation at break greater than 450%, when measured at 23°C, and (ii) a tensile strength at break greater than 12 MPa and an elongation at break greater than 600%, when measured at 100°C.

2. The tire of claim 1 wherein the angle of the first working belt (54) with the circumferential direction of the tire (10) is different than the angle of the second working belt (56) with the circumferential direction of the tire (10).

3. The tire of claim 1 wherein the angle of the first working belt (54) with the circumferential direction of the tire (10) is greater than the angle of the second working belt (56) with the circumferential direction of the tire (10).

4. The tire of at least one of the previous claims wherein the absolute value of the difference between the angle of the first working belt (54) with the circumferential direction of the tire (10) minus the angle of the second working belt (56) with the circumferential direction of the tire (10) is greater than 5 degrees.

5. The tire of at least one of the previous claims wherein the tire (10) further includes a top belt (62), and wherein the axial width of the relatively low angle belt (58) is greater than the axial width of the top belt (62).

6. The tire of claim 1 wherein the first and the second working belt (54, 56) comprise extensible reinforcement cords.

7. The tire of claim 6 wherein the extensible reinforcement cords are formed of wire having a % elongation at 10% of breaking load greater than 0.2 %, alternatively greater than 0.4 %, when taken from wire from a cured tire.

8. The tire of at least one of the previous claims wherein the extensible reinforcement cords of the relatively low angle belt (58) are formed of wire having a % elongation at 10% of breaking load greater than 0.2 %, alternatively greater than 0.4% or greater than 0.8%, when taken from wire from a cured tire.

9. The tire of at least one of the previous claims wherein the extensible reinforcement cords of the relatively low angle belt (58) are formed of wire having a % elongation at 10% of breaking load greater than 1.2 %, when taken from wire from a cured tire.

10. The tire of at least one of the previous claims wherein the gauge from cord to cord between the second working belt (56) and the first working belt (54) is less than 6 mm.

11. The tire of at least one of the previous claims wherein the half axial belt width of the first working belt (54) minus the half axial belt width of the second belt (56) is in a range of from 10 mm to 18 mm.

## Patentansprüche

1. Luftreifen zur Verwendung auf Lastkraftwagen, wobei der Reifen (10) eine Lauffläche (12) und eine Gürtelstruktur (50) aufweist, die radial innerhalb der Lauffläche (12) angeordnet ist, wobei die Gürtelstruktur (50) einen ersten Arbeitsgürtel (54) und einen zweiten Arbeitsgürtel (56) aufweist, wobei der Winkel des ersten und des zweiten Arbeitsgürtels (54, 56) im Bereich von 10 Grad bis 50 Grad liegt, wenn er relativ zur Umfangsrichtung des Reifens (10) gemessen wird, wobei die Gürtelstruktur (50) ferner einen einen relativ niedrigen Winkel aufweisenden Gürtel (58) umfasst, der dehnbare Verstärkungskorde aufweist, die unter einem Winkel von weniger als 5 Grad relativ zur Umfangsrichtung des Reifens (10) angeordnet sind, **dadurch gekennzeichnet, dass** die Lauffläche (12) eine Laufflächenverbindung umfasst, die (i) eine Bruchfestigkeit von mehr als 18 MPa und eine Bruchdehnung von mehr als 450 %, die bei 23 °C gemessen wird, aufweist, und (ii) eine Bruchfestigkeit von mehr als 12 MPa und eine Bruchdehnung von mehr als 600 %, wenn sie bei 100 °C gemessen werden, aufweist.

2. Reifen nach Anspruch 1, wobei der Winkel, den der erste Arbeitsgürtel (54) mit der Umfangsrichtung des Reifens (10) bildet, anders ist als der Winkel den der zweite Arbeitsgürtel (56) mit der Umfangsrichtung des Reifens (10) bildet.

3. Reifen nach Anspruch 1, wobei der Winkel, den der erste Arbeitsgürtel (54) mit der Umfangsrichtung des Reifens (10) bildet, größer ist als der Winkel, den der zweite Arbeitsgürtel (56) mit der Umfangsrichtung des Reifens (10) bildet.

4. Reifen nach mindestens einem der vorhergehenden Ansprüche, wobei der Absolutwert der Differenz zwischen dem Winkel, den der erste Arbeitsgürtel (54) mit der Umfangsrichtung des Reifens (10) bildet, abzüglich des Winkels den der zweite Arbeitsgürtel (56) mit der Umfangsrichtung des Reifens (10) bildet, größer als 5 Grad ist.

5. Reifen nach mindestens einem der vorhergehenden Ansprüche, wobei der Reifen (10) weiterhin einen oberen Gürtel (62) enthält, und wobei die axiale Breite des Gürtels (58), der einen relativ niedrigen Winkel aufweist, größer ist als die axiale Breite des oberen Gürtels (62).

6. Reifen nach Anspruch 1, wobei der erste und der zweite Arbeitsgürtel (54, 56) dehnbare Verstärkungskorde umfassen.

7. Reifen nach Anspruch 6, wobei die dehnbaren Verstärkungskorde aus Draht gebildet sind, der eine prozentuale Dehnung bei 10 % der Bruchlast von mehr als 0,2 %, alternativ von mehr als 0,4 %, aufweist, wenn er von Draht aus einem vulkanisierten Reifen entnommen wird.

8. Reifen nach mindestens einem der vorhergehenden Ansprüche, wobei die dehnbaren Verstärkungskorde des Gürtels (58), die einen relativ niedrigen Winkel aufweisen, aus Draht gebildet sind, der eine prozentuale Dehnung bei 10 % der Bruchlast von mehr als 0,2 %, alternativ mehr als 0,4 % oder mehr als 0,8 % aufweist, wenn er von Draht aus einem vulkanisierten Reifen genommen wird.

9. Reifen nach mindestens einem der vorhergehenden Ansprüche, wobei die dehnbaren Verstärkungskorde des Gürtels (58), die einen relativ niedrigen Winkel aufweisen, aus Draht gebildet sind, der eine prozentuale Dehnung bei 10 % der Bruchlast von mehr als 1,2 % aufweist, wenn er von Draht aus einem vulkanisierten Reifen genommen wird.

10. Reifen nach mindestens einem der vorhergehenden Ansprüche, wobei der Abstand von Kord zu Kord zwischen dem zweiten Arbeitsgürtel (56) und dem ersten Arbeitsgürtel (54) weniger als 6 mm beträgt.

11. Reifen nach mindestens einem der vorhergehenden Ansprüche, wobei die halbe axiale Gürtelbreite des ersten Arbeitsgürtels (54) abzüglich der halben axialen Gürtelbreite des zweiten Gürtels (56) in einem Bereich von 10 mm bis 18 mm liegt.

## Revendications

1. Bandage pneumatique pour son utilisation sur des camions, le bandage pneumatique (10) comprenant une bande de roulement (12) et une structure de ceintures (50) disposée, dans la direction radiale, à l'intérieur de la bande de roulement (12), la structure de ceintures (50) englobant une première ceinture de travail (54) et une deuxième ceinture de travail (56), dans lequel l'angle formé par la première et la deuxième ceinture de travail (54, 56) se situe dans une plage allant de 10 degrés à 50 degrés, tel qu'on le mesure par rapport à la direction circonférentielle du bandage pneumatique (10), dans lequel la structure de ceintures (50) comprend en outre une ceinture (58) formant un angle relativement petit, qui possède des câblés de renforcement extensibles qui forment un angle inférieur à 5 degrés par rapport à la direction circonférentielle du bandage pneumatique (10), **caractérisé en ce que** la bande de roulement (12) comprend un composé de bande de roulement qui possède (i) une résistance à la rupture par traction supérieure à 18 MPa et un allongement à la rupture supérieure à 450 %, lorsqu'on procède à la mesure à 23 °C, et (ii) une résistance à la rupture par traction supérieure à 12 MPa et un allongement à la rupture supérieur à 600 %, lorsqu'on procède à la mesure à 100 °C.

2. Bandage pneumatique selon la revendication 1, dans lequel l'angle formé par la première ceinture de travail (54) avec la direction circonférentielle du bandage pneumatique (10) est différent de l'angle formé par la deuxième ceinture de travail (56) avec la direction circonférentielle du bandage pneumatique (10).

3. Bandage pneumatique selon la revendication 1, dans lequel l'angle formé par la première ceinture de travail (54) avec la direction circonférentielle du bandage pneumatique (10) est supérieur à l'angle formé par la deuxième ceinture de travail (56) avec la direction circonférentielle du bandage pneumatique (10).

4. Bandage pneumatique selon au moins une des revendications précédentes, dans lequel la valeur absolue de la différence entre l'angle formé par la première ceinture de travail (54) avec la direction circonférentielle du bandage pneumatique (10) moins l'angle formé par la deuxième ceinture de travail (56) avec la direction circonférentielle du bandage pneumatique (10) est supérieur à 5 degrés.

5. Bandage pneumatique selon au moins une des revendications précédentes, dans lequel le bandage pneumatique (10) englobe en outre une ceinture supérieure (62), et dans lequel la largeur axiale de la ceinture (58) formant un angle relativement petit est supérieure à la largeur axiale de la ceinture supérieure (62).

6. Bandage pneumatique selon la revendication 1, dans lequel la première et la deuxième ceinture de travail (54, 56) comprennent des câblés de renforcement extensibles.

7. Bandage pneumatique selon la revendication 6, dans lequel les câblés de renforcement extensibles sont réalisés à partir d'un fil métallique qui possède un pourcentage d'allongement, à 10 % de charge de rupture, supérieur à 0,2 %, en variante supérieur à 0,4 %, lorsqu'on le mesure à partir d'un fil métallique qui provient d'un bandage pneumatique vulcanisé.

8. Bandage pneumatique selon au moins une des revendications précédentes, dans lequel les câblés de renforcement extensibles de la ceinture (58) formant un angle relativement petit sont réalisés à partir d'un fil métallique qui possède un pourcentage d'allongement, à 10 % de charge de rupture, supérieur à 0,2 %, en variante supérieur à 0,4 % ou supérieur à 0,8 %, lorsqu'on le mesure à partir d'un fil métallique qui provient d'un bandage pneumatique vulcanisé.

9. Bandage pneumatique selon au moins une des revendications précédentes, dans lequel les câblés de renforcement extensibles de la ceinture (58) formant un angle relativement petit sont réalisés à partir d'un fil métallique qui possède un pourcentage d'allongement, à 10 % de charge de rupture, supérieur à 1,2 %, lorsqu'on le mesure à partir d'un fil métallique qui provient d'un bandage pneumatique vulcanisé.

10. Bandage pneumatique selon au moins une des revendications précédentes, dans lequel l'écartement de câblé à câblé entre la deuxième ceinture de travail (56) et la première ceinture de travail (54) est inférieur à 6 mm.

11. Bandage pneumatique selon au moins une des revendications précédentes, dans lequel la moitié de la largeur axiale de la première ceinture de travail (54) moins la moitié de la largeur axiale de la deuxième ceinture (56) se situe dans une plage allant de 10 mm à 18 mm.
